# EUROPEAN PATENT SPECIFICATION

(11) **EP 2 261 106 B1**
(45) Date of publication and mention of the grant of the patent: **26.09.2012**
(21) Application number: 10164345.0
(22) Date of filing: 28.05.2010
(51) Int. Cl.: B62D 33/06

(54) **Cab frame structure for a vehicle**
Tragrahmenstruktur einer Fahrkabine eines Fahrzeugs
Structure de cadre d'une cabine de conducteur pour véhicule

(30) Priority: 10.06.2009 US 481868
(43) Date of publication of application: 15.12.2010
(73) Proprietor: Deere & Company, Moline, IL 61265-8098 (US)
(72) Inventor: Wood, Robert L, Independence, KS 67301 (US); Landers, Trace D, Denver, IA 50622 (US); Mugge, Wayne D, Dike, IA 50624 (US); Warren, Charles N, Cedar Falls, IA 50613 (US)
(74) Representative: Dehnhardt, Florian Christopher

(56) References cited:
- EP-A1- 1 555 166
- EP-A2- 1 190 939
- FR-A1- 2 267 230
- GB-A- 2 306 921

## Description

The present invention relates to a cab frame structure for a vehicle, in particular an agricultural tractor.

A cab frame structure as defined by the preamble of claim 1 is disclosed in EP 1 190 939.

Common agricultural tractors have cab frame structures which are designed to perform as roll-over protection system (ROPS). In such structures the beltline area requires a lot of support between the rear corner posts due to the significant loads being transferred from the upper portion of the cab frame structure to the cab mounting structure. Some previous production designs have required as many as seven to eight beltline members to meet design requirements. Thus it is desired to have a simplified yet robust beltline support design.

Accordingly, object of this invention is to provide a simplified yet robust beltline support design for a cab frame structure for a vehicle.

These and other objects are achieved by the present invention, as defined by claim 1, wherein a cab frame structure for a vehicle, in particular an agricultural tractor, includes a left corner post and a right corner post. Each corner post is curved to define a slanted transition portion between upper and lower portions thereof, wherein a beltline member extends between the slanted transition portions of the rear corner posts.

For a complete understanding of the objects, techniques, and structure of the invention reference should be made to the following detailed description and accompanying drawings, wherein similar components are designated by identical reference numerals:
- Fig. 1: is a perspective view of a cab frame structure for an agricultural tractor embo- dying the present invention,
- Fig. 2: is an enlarged partially exploded rear perspective view of a portion of the cab frame structure according to Fig. 1,
- Fig. 3: is an enlarged partially exploded front perspective view of a portion of the cab frame structure according to Fig. 1,
- Fig. 4: is a sectional view taken along lines 4-4 as shown in Fig. 1, and
- Fig. 5: is a top view of a rear portion of the cab frame structure according to Fig. 1.

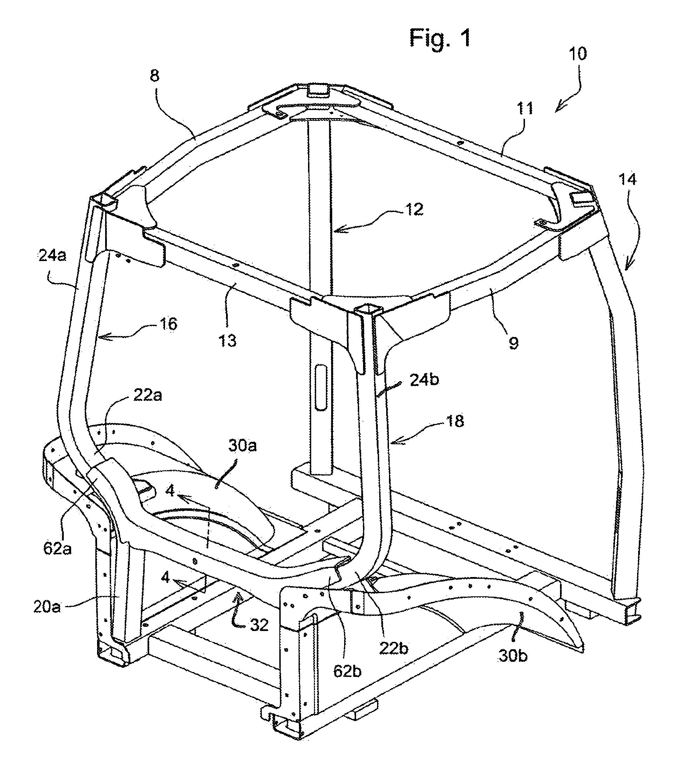

Referring to Figs. 1 to 3, a cab frame structure 10 for a vehicle, such as an agricultural tractor, includes left and right front corner posts 12 and 14, and left and right rear corner posts 16 and 18. The upper ends of posts 12, 14, 16 and 18 are jointed together by upper side posts 8 and 9, upper front post 11 and upper rear post 13.

Each of the rear corner posts 16 and 18 is formed from a tube which is bent or curved to define lower portions 20a and 20b, slanted transition portions 22a and 22b and upper portions 24a and 24b. Lower portions 20a and 20b are positioned at the rear of the cab frame structure 10 inwards of rear wheel fenders 30a and 30b. The slanted transition portions 22a and 22b are between the lower portions 20a and 20b and the upper portions 24a and 24b.

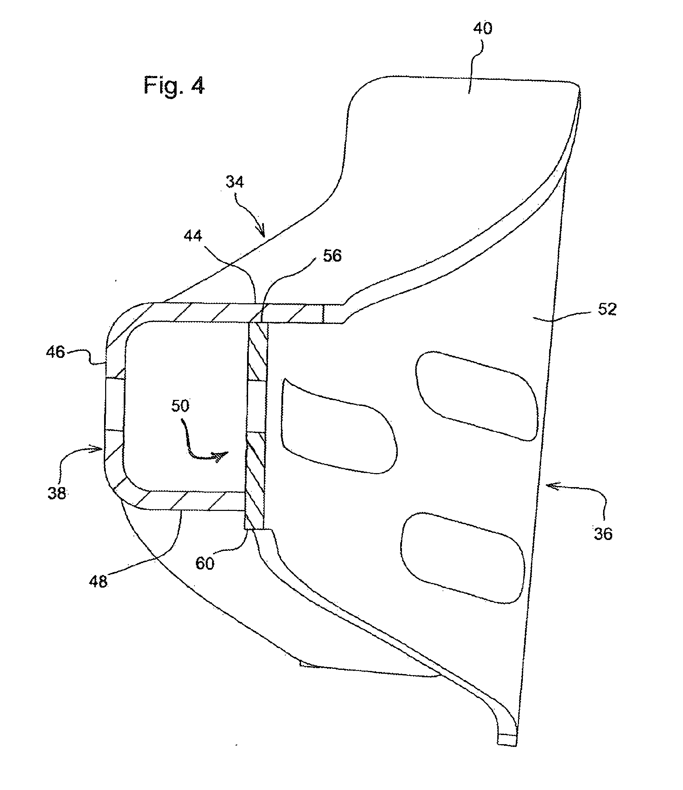

Slanted transition portions 22a and 22b are jointed together by a waist level or beltline member 32. Beltline member 32 includes a rear beltline member 34 and a front beltline member 36 which are welded together, and which are welded to the respective slanted transition portions 22a and 22b. Rear beltline member 34 includes a central portion 38, a left flange portion 40 and a right flange portion 42. As best seen in Fig. 4, the central portion 38 has a c-shaped cross-sectional shape with an upper side 44, a back plate 46 and a lower side 48. The upper side 44 is wider than the lower side 48. As best seen in Figs. 1 to 3, the flange portions 40 and 42 form lips 62a and 62b which are conformed to and are welded to the top and rear sides of the respective slanted transition portions 22a and 22b.

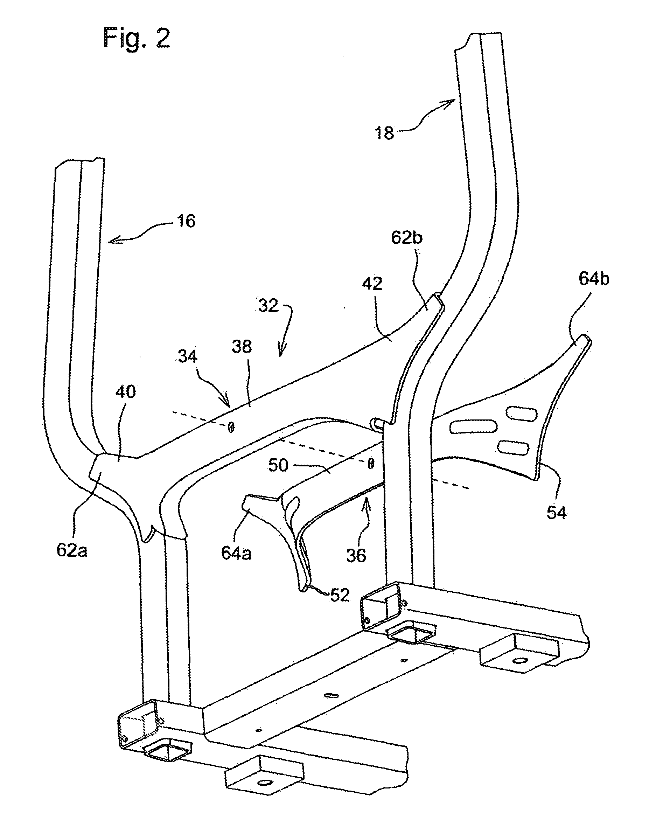

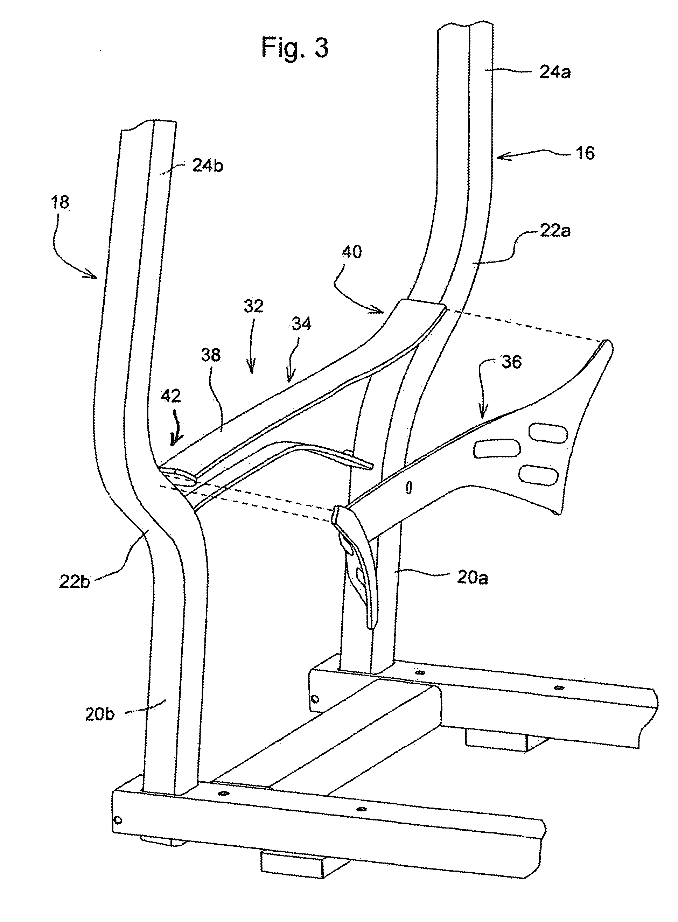

Front beltline member 36 includes a central portion 50, a left flange portion 52 and a right flange portion 54. As best seen in Fig. 4, the central portion 50 has a flat cross-sectional shape with an upper edge 56, a back side 58 and a lower edge 60. The upper edge 56 is welded to a bottom surface of the upper side 44 of the rear beltline member 34. The front edge of lower side 48 is welded to a lower portion of the front beltline member 36. As best seen in Figs. 2 and 3, the flange portions 52 and 54 form lips 64a and 64b which are conformed to and are welded to front sides of the respective slanted transition portions 22a and 22b.

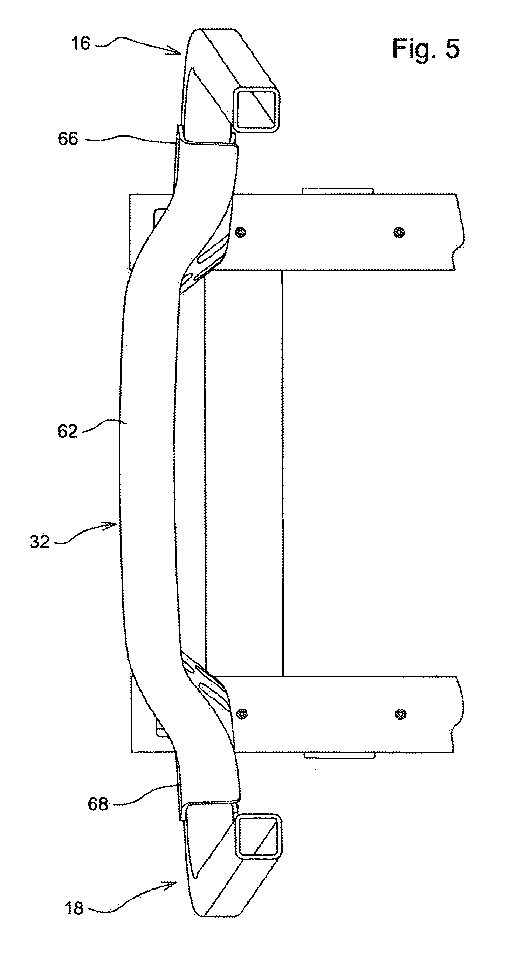

As best seen in Fig. 5, the central portion 62 of the beltline member 32 is offset to the rear with respect to left and right end portions 66 and 68. This offset allows for more room in the interior of the cab.

Flange portions 40, 42, 52 and 54 form gussets between the rear corner posts 16 and 18 and the beltline members 34 and 36. The result is a roll-over protection capable beltline support design for a cab frame structure of an agricultural tractor. This provides sufficient structural support to the beltline region of the cab frame structure that is needed for roll-over protection certification, while at the same time significantly reducing the overall part count to achieve this functionality.

## Claims

1. A cab frame structure for a vehicle, in particular an agricultural tractor, including a left corner post (16) and a right corner post (18), each corner post (16, 18) being curved to define a slanted transition portion (22a, 22b) between upper and lower portions (20a, 20b, 24a, 24b) thereof, wherein a beltline member (32) extends between the slanted transition portions (22a, 22b) of the rear corner posts (16, 18), **characterized in that** the beltline member (32) includes a rear beltline member (34) and a front beltline member (36) attached to the rear beltline member (34), wherein the rear and front beltline members (34, 36) have flange portions (40, 42, 52, 54) attached to the slanted transition portions (22a, 22b), wherein the flange portions (40, 42, 52, 54) form gussets between the rear corner posts (16, 18) and the beltline member (32).

2. The cab frame structure according to claim 1, **characterized in that** the rear beltline member (34) includes a central portion (38) having an upper side (44), a back plate (46) and a lower side (48), wherein the upper side (44) is wider than the lower side (48).

3. The cab frame structure according to claim 1, **characterized in that** the central portion (38) of the rear beltline member (34) has a c-shaped cross-sectional shape.

4. The cab frame structure according to claim 1, **characterized in that** the front beltline member (36) including a central portion (50) having an upper edge (56), a back side (58) and a lower edge (60), wherein the upper edge (56) is attached to a bottom surface of the upper side (44) of the rear beltline member (34) and a front edge of the lower side (48) of the rear beltline member (34) is attached to a lower portion of the front beltline member (36).

5. The cab frame structure according to claim 4, **characterized in that** the central portion (50) of the front beltline member (36) has a flat cross sectional-shape.

6. The cab frame structure according to one of claims 1 to 5, **characterized in that** a the central portion (62) of the beltline member (32) is offset to the rear with respect to left and right end portions (66, 68).

7. Vehicle, in particular agricultural tractor, having a cab frame structure according to one of claims 1 to 6.

## Patentansprüche

1. Fahrerkabinenrahmenstruktur für ein Fahrzeug, insbesondere einen landwirtschaftlichen Traktor, die einen linken Eckpfosten (16) und einen rechten Eckpfosten (18) enthält, wobei jeder Eckpfosten (16, 18) bogenförmig ist, um einen geneigten Übergangsabschnitt (22a, 22b) zwischen deren oberen und unteren Abschnitten (20a, 20b, 24a, 24b) zu definieren, wobei sich ein Gürtellinienelement (32) zwischen den geneigten Übergangsabschnitten (22a, 22b) der hinteren Eckpfosten (16, 18) erstreckt, **dadurch gekennzeichnet, dass** das Gürtellinienelement (32) ein hinteres Gürtellinienelement (34) und ein an dem hinteren Gürtellinienelement (34) befestigtes vorderes Gürtellinienelement (36) enthält, wobei das hintere und das vordere Gürtellinienelement (34, 36) an den geneigten Übergangsabschnitten (22a, 22b) befestigte Flanschabschnitte (40, 42, 52, 54) besitzen, wobei die Flanschabschnitte (40, 42, 52, 54) Eckversteifungen zwischen den hinteren Eckpfosten (16, 18) und dem Gürtellinienelement (32) bilden.

2. Fahrerkabinenrahmenstruktur nach Anspruch 1, **dadurch gekennzeichnet, dass** das hintere Gürtellinienelement (34) einen Mittelabschnitt (38) enthält, der eine Oberseite (44), eine Rückplatte (46) und eine Unterseite (48) besitzt, wobei die Oberseite (44) breiter als die Unterseite (48) ist.

3. Fahrerkabinenrahmenstruktur nach Anspruch 1, **dadurch gekennzeichnet, dass** der Mittelabschnitt (38) des hinteren Gürtellinienelements (34) eine C-förmige Querschnittsform aufweist.

4. Fahrerkabinenrahmenstruktur nach Anspruch 1, **dadurch gekennzeichnet, dass** das vordere Gürtellinienelement (36) einen Mittelabschnitt (50) enthält, der eine Oberkante (56), eine Rückseite (58) und eine Unterkante (60) besitzt, wobei die Oberkante (56) an einer unteren Fläche der Oberseite (44) des hinteren Gürtellinienelements (34) befestigt ist und eine Vorderkante der Unterseite (48) des hinteren Gürtellinienelements (34) an einen unteren Abschnitt des vorderen Gürtellinienelements (36) befestigt ist.

5. Fahrerkabinenrahmenstruktur nach Anspruch 4, **dadurch gekennzeichnet, dass** der Mittelabschnitt (50) des vorderen Gürtellinienelements (36) eine flache Querschnittsform aufweist.

6. Fahrerkabinenrahmenstruktur nach einem der Ansprüche 1 bis 5, **dadurch gekennzeichnet, dass** ein Mittelabschnitt (62) des Gürtellinienelements (32) in Bezug auf die linken und rechten Endabschnitte (66, 68) zu dem Heck versetzt ist.

7. Fahrzeug, insbesondere ein landwirtschaftlicher Traktor, der eine Fahrerkabinenrahmenstruktur nach einem der Ansprüche 1 bis 6 besitzt.

## Revendications

1. Structure de cadre de cabine pour un véhicule, en particulier un tracteur agricole, comportant un montant de coin gauche (16) et un montant de coin droit (18), chaque montant de coin (16, 18) étant incurvé de manière à définir une portion de transition inclinée (22a, 22b) entre des portions supérieures et inférieures (20a, 20b, 24a, 24b) de celui-ci, un organe de ligne de ceinture (32) s'étendant entre les portions de transition inclinées (22a, 22b) des montants de coin arrière (16, 18), **caractérisée en ce que** l'organe de ligne de ceinture (32) comporte un organe de ligne de ceinture arrière (34) et un organe de ligne de ceinture avant (36) attaché à l'organe de ligne de ceinture arrière (34), les organes de ligne de ceinture arrière et avant (34, 36) ayant des portions de bride (40, 42, 52, 54) attachées aux portions de transition inclinées (22a, 22b), les portions de bride (40, 42, 52, 54) formant des goussets entre les montants de coin arrière (16, 18) et l'organe de ligne de ceinture (32).

2. Structure de cadre de cabine selon la revendication 1, **caractérisée en ce que** l'organe de ligne de ceinture arrière (34) comporte une portion centrale (38) ayant un côté supérieur (44), une plaque arrière (46) et un côté inférieur (48), le côté supérieur (44) étant plus large que le côté inférieur (48).

3. Structure de cadre de cabine selon la revendication 1, **caractérisée en ce que** la portion centrale (38) de l'organe de ligne de ceinture arrière (34) a une section transversale en forme de C.

4. Structure de cadre de cabine selon la revendication 1, **caractérisée en ce que** l'organe de ligne de ceinture avant (36) comporte une portion centrale (50) ayant un bord supérieur (56), un côté arrière (58) et un bord inférieur (60), le bord supérieur (56) étant attaché à une surface inférieure du côté supérieur (44) de l'organe de ligne de ceinture arrière (34) et un bord avant du côté inférieur (48) de l'organe de ligne de ceinture arrière (34) étant attaché à une portion inférieure de l'organe de ligne de ceinture avant (36).

5. Structure de cadre de cabine selon la revendication 4, **caractérisée en ce que** la portion centrale (50) de l'organe de ligne de ceinture avant (36) a une forme plate en section transversale.

6. Structure de cadre de cabine selon l'une quelconque des revendications 1 à 5, **caractérisée en ce qu'**une portion centrale (62) de l'organe de ligne de ceinture (32) est décalée vers l'arrière par rapport aux portions d'extrémité gauche et droite (66, 68).

7. Véhicule, en particulier tracteur agricole, ayant une structure de cadre de cabine selon l'une quelconque des revendications 1 à 6.
